# EUROPEAN PATENT SPECIFICATION

(11) **EP 2 125 666 B1**
(45) Date of publication and mention of the grant of the patent: **25.12.2019**
(21) Application number: 07846832.9
(22) Date of filing: 27.11.2007
(51) Int. Cl.: C04B 35/576, C04B 35/565, C04B 35/622, C04B 35/634, C04B 35/636, C04B 38/00

(54) **EXTRUSION OF CERAMIC MASSES USING ADDITIVES COMPRISING CELLULOSE**
STRANGPRESSEN VON KERAMISCHEN MASSEN CELLULOSEETHERHALTIGE ADDITIVE ENTHALTEND
L'EXTRUSION DE MASSES CÉRAMIQUES COMPRENANT DES ADDITIFS COMPRENANT DES ÉTHERS DE CELLULOSE

(30) Priority: 22.12.2006 DE 102006062141
(43) Date of publication of application: 02.12.2009
(73) Proprietor: Dow Global Technologies LLC, Midland, MI 48674 (US)
(72) Inventor: BAYER, Roland, 29664 Walsrode (DE)
(74) Representative: f & e patent
(86) International application number: PCT/EP2007/010267
(87) International publication number: WO 2008/077451

(56) References cited:
- EP-A- 1 426 349
- WO-A-2007/003269
- DE-A1- 19 828 491
- US-A- 4 267 086
- US-A- 5 609 681
- US-B1- 6 284 188
- US-B1- 6 620 751
- DATABASE WPI Week 198414 Derwent Publications Ltd., London, GB; AN 1984-085879 XP002484462 & JP 59 036278 A (FUKAZAWA K) 28 February 1984 (1984-02-28)
- DATABASE WPI Week 198730 Derwent Publications Ltd., London, GB; AN 1987-212128 XP002484463 & SU 1 277 192 A (SHOSTINSK CHEM PHOT) 15 December 1986 (1986-12-15)
- DATABASE WPI Week 200648 Derwent Publications Ltd., London, GB; AN 2006-468054 XP002484464 & JP 2006 176394 A (ASAHI DENKA KOGYO KK) 6 July 2006 (2006-07-06)

## Description

The present invention relates to use of specific additives comprising cellulose ether for improving the extrudability of ceramic masses, a corresponding extrusion process, the extrudates and a ceramic mass.

Water-soluble cellulose ethers have been used for many years as water retention agents, plasticizers and lubricants in the extrusion of ceramic masses and other masses which set as a result of baking or sintering to produce honeycomb bodies or other complicated profiles having similarly fine structures (see, for example: James S. Reed, Principles of Ceramics Processing, John Wiley & Sons, 1995, Chapter 23: Extrusion and Plastic Deformation Forming, p. 450 ff.)

The extrusion of ceramic masses and other masses which set as a result of baking or sintering is carried out by pressing a plastic mass through a die to produce any desired profiles, preferably honeycomb profiles as are used in catalysts or diesel soot particle filters. These masses can have various compositions and basically comprise a material, in particular a ceramic material, which is sinterable or hardens as a result of a ceramic baking process. They can further comprise catalytically active materials, fibers, aggregates and lightweight aggregates.

US 6,284,188 and US 6,620,751 disclose a ceramic honeycomb used as catalyst carrier, whereby the honeycomb is made from ceramic additives, methyl cellulose, plasticizers and polyalkylene glycol.

Technical and economic disadvantages of the usually extruded ceramic masses and other masses which set as a result of baking or sintering are high extrusion pressures which make operation of the extruders prematurely uneconomical due to high wear or high power costs. Another disadvantage is an unsatisfactorily low extrusion rate which reduces the capacity of the entire plant. The mass should undergo very little heating as a result of internal friction, since the consumption of cooling water or electric cooling likewise impairs the economics. The mass should be able to be extruded without cracks and form no cracks after drying of the extruded profile in air and subsequent baking or sintering. The cohesion of the particles in the extruded mass should be so high that even thin webs should be able to be extruded without problems. The shrinkage on drying and the shrinkage after baking should be minimal and virtually no crack formation should take place.

It has now surprisingly been found that the extrudability of such masses can be improved considerably when (A) at least one cellulose ether, (B) at least one plasticizer and (C) at least one defoamer are added as individual components or as premixed additive.

The invention accordingly provides a process for the extrusion of ceramic masses, which comprises
a) mixing a ceramic mass and which comprises at least one compound selected from the group consisting of cordierite; mullite; silicon carbide; titanium dioxide; titanium carbide; boron carbide; boron oxide; talc; carbon black; graphite; rare earth oxides and zeolites, with
   (A) at least one cellulose ether,
   (B) at least one plasticizer, wherin polycarboxylic acid copolymers and/or salts thereof are used, and
   (C) at least one defoamer selected from the group comprising alkylene glycol homopolymers, copolymers, terpolymers and block copolymers; adducts of alkylene oxides; alkylene glycol ethers of higher alcohols; alkylene glycol fatty acid esters; polyoxyalkylene sorbitol fatty acid esters; addition products of ethylene oxide and propylene oxide and acetylene; phosphate esters; and mixtures thereof,
   as individual components or as premixed additive, the amount of (A), (B) and (C), viewed as a mixture, used in the ceramic mass is from 0.3 to 10% by weight based on the total formulation of the ceramic mass and
b) subsequently extruding it.

The invention therefore also provides a ceramic mass comprising (A) at least one cellulose ether, (B) at least one plasticizer and (C) at least one defoamer as specified in any of the claims 1 to 6 and wherein the ceramic mass comprises at least one compound selected from the group consisting of cordierite; mullite; silicon carbide; titanium dioxide; titanium carbide; boron carbide; boron oxide; talc; carbon black; graphite; rare earth oxides and zeolites.

For the purposes of the present invention, ceramic masses comprise at least one of the components listed below which can be baked or sintered by baking or sintering alone or with addition of other sintering aids:
cordierite; mullite; silicon carbide; silicon boride; titanium dioxide; titanium carbide; boron carbide; boron oxide; talc; carbon black; graphite; rare earth oxides; and zeolites.

The term "ceramic masses and other masses which set as a result of baking or sintering" does not include hydraulic binders such as cement or gypsum and masses based on cement or gypsum. These hydraulic binders set as a result of incorporation of water into the crystal lattice.

The above-mentioned masses can also comprise fibers which leave behind pores after baking or remain in the mass and thus increase the flexural strength.

For the present purposes, fibers are all types of natural or synthetic fibers such as fibers based on cellulose, bamboo, coconut, polyethylene, polypropylene, polyamide, polyacrylonitrile, carbon, glass, ceramic and other mineral fibers. Their fiber lengths and thicknesses can be varied within wide ranges.

Suitable cellulose ethers (A) are, in particular, ionic cellulose ethers such as sulfoethylcellulose or carboxymethylcellulose and salts thereof, or nonionic cellulose ethers such as alkylcelluloses, hydroxyalkylalkylcelluloses or hydroxyalkylcelluloses, in particular methylcellulose, methylhydroxyethylcellulose,
methylhydroxypropylcellulose, hydroxyethylcellulose, ethylhydroxyethylcellulose, methylethylhydroxyethylcellulose, methylhydroxyethylhydroxypropylcellulose, methylhydroxyethylhydroxybutylcellulose or cellulose ethers which at the same time comprise methyl groups and longer-chain hydrophobic side chains as well as mixtures of the above-mentioned products.

The viscosities of the above-mentioned cellulose ethers are generally from 400 to 200 000 mPa·s, determined in a 2 % by weight aqueous solution at 20°C in a Haake rotational viscometer.

Plasticizers (B) according to the present invention are copolymers of acrylic and methacrylic acid, their bifunctional acids and also their salts.

Plasticizers here are expressly not from the class of melamine sulfonates or melamine-formaldehyde sulfonates, naphthalene sulfonates, lignosulfonates or mixtures thereof.

Defoamers (C) according to the present invention are pure substances or mixtures in liquid or solid form which comprise at least one of the following: alkylene glycol homopolymers, copolymers, terpolymers and block copolymers, for example based on ethylene oxide or propylene oxide, adducts of alkylene oxides, alkylene glycol ethers of higher alcohols, alkylene glycol fatty acid esters, polyoxyalkylene sorbitol fatty acid esters, addition products of ethylene oxide and propylene oxide and acetylene, phosphate esters such as tributyl phosphate, sodium octylphosphate and the like as well as mixtures of the above-mentioned products.

Particularly preferred are alkylene glycol homopolymers, copolymers, terpolymers and block copolymers, for example based on ethylene oxide or propylene oxide, adducts of alkylene oxides, alkylene glycol ethers of higher alcohols, alkylene glycol fatty acid esters.

Very particular preference is given to alkylene glycol homopolymers, copolymers, terpolymers and block copolymers, for example based on ethylene oxide or propylene oxide, adducts of alkylene oxides, alkylene glycol ethers of higher.

Apart from the components (A) to (C) mentioned as important for the purposes of the invention, the masses can also comprise further constituents such as hydrophobicizing agents, redispersion powders, superabsorbents based on crosslinked acrylates and polysaccharides, lubricants (for example polyethylene oxide homopolymers, copolymers and terpolymers), surfactants, accelerators, retardants, fatty acids and esters thereof, polymers based on acids, salts, amides and esters of acrylic acids and methacrylic acids, polyvinyl alcohols including their derivatives and polymers based on urethanes.

The components (A) to (C) are used in the following ratios relative to one another:
The proportion of component (A) based on the total amount of (A), (B) and (C) is preferably from 10 to 91 % by weight, particularly preferably from 18 to 91 % by weight, very particularly preferably from 25 to 91 % by weight.

The proportion of component (B) based on the total amount of (A), (B) and (C) is preferably from 8 to 70 % by weight, particularly preferably from 8 to 65 % by weight, very particularly preferably from 8 to 60 % by weight.

The proportion of component (C) based on the total amount of (A), (B) and (C) is preferably from 1 to 20% by weight, particularly preferably from 1 to 17% by weight, very particularly preferably from 1 to 15% by weight.

The amount of (A), (B) and (C), viewed as a mixture, used in the ceramic mass is from 0.3 to 10 % by weight, preferably from 0.7 to 9 % by weight, particularly preferably from 1 to 8% by weight, in each case based on the total formulation.

(A), (B) and (C) can be added to the mass to be extruded either as a prefabricated mixture or else by stepwise addition of the individual components.

The invention further provides the extrudates obtainable by the process of the invention.

### Examples:

As cellulose ether (A), use was made of a methylcellulose Walocel M-20678, Wolff Cellulosics GmbH, Germany, viscosity according specification: 75 000-85 000 mPa·s (of a 2 % aqueous solution at 20°C, Shear-rate 2.55 s⁻¹ determined in a Haake rotational viscometer).

As plasticizer (B), use was made of Melflux 2651 F, BASF, Germany. This is a polycarboxylate ether.

As defoamer (C), use was made of Agitan P 803, Münzing Chemie, Germany. This is a defoamer based on alkane/glycol applied to a support material.

The additive was prepared by mixing the components (A) to (C) in the amounts indicated in the table below.

### Procedure for the extrusion experiments

35 parts by weight of silicon carbide SiC Dunkel Mikro F 280 (manufactured by ESK-SiC GmbH, Frechen, Germany), 35 parts by weight of silicon carbide SiC Dunkel Mikro F 360 (manufactured by ESK-SiC GmbH, Frechen, Germany), 30 parts by weight of silicon carbide SiC SM 10 (manufactured by ESK-SiC GmbH, Frechen, Germany) and 4 parts by weight (based on 100 parts by weight of silicon carbide) of the additive according to the invention were firstly mixed dry in a fluidized-bed mixer (manufactured by Lödige, Germany) until homogeneous, water at 20°C was subsequently added, the mass was mixed further and kneaded in a kneader (manufactured by AMK, Aachen, Germany) for a few minutes. The mass was then immediately introduced into the feed trough of a single-screw extruder maintained at 20°C (Händle 8D, screw diameter 8 cm, from Händle, Mühlacker, Germany). The mass was extruded through a perforated plate and passed through the vacuum chamber for degassing. It was then firstly strained (i.e. pressed through a screen having a mesh size of 0.4 or 0.2 mm in order to free the mass of aggregates) and subsequently extruded through a honeycomb die and discharged onto a conveyor belt. To be able to see differences between cellulose ethers which lubricate well and lubricate poorly, the cooling was switched off on the extruder after commencement of the experiment and the heating of the mass during the experiment was measured.

All masses extruded in this way were set to a customary consistency (Shore hardness = 10.0-11.5) by means of a water to solids ratio (W/S ratio) based on their water requirement. The consistency is a measure of the stiffness of the mass.

| Cellulose ether composition (A:B:C) | W/S | Shore hardness | Pressure at the 200 cpsi die (bar) | Cohesion of the mass (+++/++/+/0/-/--/---) | Susceptibility to cracking of the mass on bending through an angle of 90° | Temperature rise in the mass during extrusion (°C) | Remarks |
|---|---|---|---|---|---|---|---|
| 100:0:0 | 0.165 | 10.5-11.5 | 46 | + | some cracks | <10°C | not according to the invention, B and C absent |
| 67:28:5 | 0.165 | 10-11.5 | 41 | +++ | no cracks | <10°C | according to the invention |
| 91:7.25:1.75 | 0.18 | 10-11.5 | 45 | ++ | a few cracks | <10°C | according to the invention |
| 89.5:10:0.5 | 0.165 | 10-11.5 | 46 | + | some cracks | <10°C | according to the invention |
| 94.5:5:0.5 | 0.165 | 10-11.0 | 44 | + | some cracks | <10°C | according to the invention |

W/S is the water/solids factor. The amount of water used was calculated only on the basis of silicon carbide.

The stiffness of the mass was tested on the freshly strained samples. If a mass is too stiff when extruded, the greater friction of the particles against one another and against the extruder walls leads to a higher power consumption, to increased wear and heating of the mass; if the mass is too soft when extruded, the shape of the extrudates is not stable.

Pressure is the pressure measured just before passage of the mass through the honeycomb die. A 200 cpsi die (web thickness = 0.30 mm) (cpsi is the number of cells per square inch) was used.

Cohesion is the cohesion of the particles. It is necessary so that web cracks are not formed in complex die geometries.

The test for susceptibility to cracking on bending of the extrudate simulates real conditions, since the transport of industrially produced honeycombs from the conveyor belt (downstream of the extruder) to drying is frequently carried out manually and the still plastic mass can distort slightly during this procedure.

The temperature of the strained and extruded masses was measured by means of a noncontact infrared thermometer after leaving the die; these temperatures correspond to those measured via the temperature sensor built into the die head.

### Experimental results:

In the comparative experiment which is not according to the invention, it is found that the pure cellulose ether alone gives passable although not very economical and technically advantageous extrusion results. The higher the extrusion pressure is, the higher is the adverse effect on the maintenance costs of the plant because of the higher abrasion which it causes. The advantage of the cellulose ether mixture(s) according to the invention is also apparent in terms of the cohesion of the extruded mass and crack formation on bending of the extruded honeycomb.

The honeycombs are subjected to increased mechanical stress during transport of the honeycombs from the extruder via the drying chambers to the furnaces, so that a reduced proportion of rejects can be expected when the cohesion is better and the susceptibility to cracking is lower.

## Claims

1. A process for the extrusion of ceramic masses, which comprises
a) mixing a ceramic mass and which comprises at least one compound selected from the group consisting of cordierite; mullite; silicon carbide; titanium dioxide; titanium carbide; boron carbide; boron oxide; talc; carbon black; graphite; rare earth oxides and zeolites, with
(A) at least one cellulose ether,
(B) at least one plasticizer, wherein polycarboxylic acid copolymers and/or salts thereof are used, and
(C) at least one defoamer selected from the group comprising alkylene glycol homopolymers, copolymers, terpolymers and block copolymers; adducts of alkylene oxides; alkylene glycol ethers of higher alcohols; alkylene glycol fatty acid esters; polyoxyalkylene sorbitol fatty acid esters; addition products of ethylene oxide and propylene oxide and acetylene; phosphate esters; and mixtures thereof,
as individual components or as premixed additive, the amount of (A), (B) and (C), viewed as a mixture, used in the ceramic mass is from 0.3 to 10% by weight based on the total formulation of the ceramic mass and
b) subsequently extruding it.

2. The process according to claim 1, wherein cellulose ethers having a viscosity of from 400 to 200 000 mPa·s, determined in an 2 % by weight aqueous solution at 20°C, are used as cellulose ether (A).

3. The process according to claim 1, wherein alkylene glycol homopolymers, copolymers, terpolymers or block copolymers are used as defoamer based on polyether.

4. The process according to any of claims 1 to 3, wherein, based on the total amount of (A), (B) and (C), the proportion of component (A) is from 10 to 91 % by weight, that of component (B) is from 8 to 70 % by weight and that of component (C) is from 1 to 20 % by weight.

5. The process according to any of claims 1 to 4, wherein the amount of (A), (B) and (C), viewed as a mixture, used is from 1 to 8 % by weight based on the total formulation of the ceramic mass.

6. The process according to any of claims 1 to 5, wherein a thermal treatment of the extrudate is carried out after extrusion.

7. An extrudate obtainable by a process according to any of claims 1 to 6 comprising the ceramic mass, cellulose ether, plasticizer, and defoamer as defined in any of claim 1-5.

8. A ceramic mass comprising (A) at least one cellulose ether, (B) at least one plasticizer and (C) at least one defoamer as specified in any of the claims 1 to 5 and wherein the ceramic mass comprises at least one compound selected from the group consisting of cordierite; mullite; silicon carbide; titanium dioxide; titanium carbide; boron carbide; boron oxide; talc; carbon black; graphite; rare earth oxides and zeolites.

9. Use of an additive for the extrusion of ceramic masses, wherein the ceramic mass comprises at least one compound selected from the group consisting of cordierite; mullite; silicon carbide; titanium dioxide; titanium carbide; boron carbide; boron oxide; talc; carbon black; graphite; rare earth oxides and zeolites, the additive comprises (A) at least one cellulose ether, (B) at least one polycarboxylic acid copolymer and/or salt thereof as plasticizer and (C) at least one defoamer as defined in claim 1.

## Patentansprüche

1. Verfahren für die Extrusion von keramischen Massen, das Folgendes umfasst
a) Mischen einer keramischen Masse, die mindestens eine Verbindung umfasst ausgewählt aus der Gruppe bestehend aus Kordierit, Mullit, Siliciumcarbid, Titandioxid, Titancarbid, Borcarbid, Boroxid; Talkum, Ruß, Graphit, Seltenerdeoxiden und Zeolithen,
mit
(A) mindestens einem Celluloseether,
(B) mindestens einem Weichmacher, wobei Polycarbonsäurecopolymere und/oder Salze davon verwendet werden, und
(C) mindestens ein Entschäumungsmittel ausgewählt aus der Gruppe umfassend Alkylenglycolhomopolymere, -copolymere, -terpolymere und - blockcopolymere; Addukte von Alkylenoxiden; Alkylenglycolether von höheren Alkoholen; Alkylenglycolfettsäureester; Polyoxyalkylensorbitfettsäureester; Additionsprodukte von Ethylenoxid und Propylenoxid und Acetylen; Phosphatester; und Mischungen davon,
als einzelne Komponenten oder als vorgemischtes Zusatzmittel, wobei die Menge von (A), (B) und (C), als Mischung betrachtet, die in der keramischen Masse verwendet wird, 0,3 bis 10 Gew.-%, auf die gesamte Formulierung der keramischen Masse bezogen, beträgt, und
b) darauffolgend Extrudieren derselben.

2. Verfahren nach Anspruch1, wobei Celluloseether, die eine Viskosität von 400 bis 200 000 mPa·s, in einer wässrigen Lösung von 2 Gew.-% bei 20 °C bestimmt, aufweisen, als Celluloseether (A) verwendet werden.

3. Verfahren nach Anspruch 1, wobei Alkylenglycolhomopolymere, -copolymere, - terpolymere oder -blockcopolymere als Entschäumungsmittel auf der Basis von Polyether verwendet werden.

4. Verfahren nach einem der Ansprüche 1 bis 3, wobei, auf der Basis der Gesamtmenge an (A), (B) und (C), der Anteil der Komponente (A) 10 bis 91 Gew.-% beträgt, derjenige der Komponente (B) 8 bis 70 Gew.-% beträgt und derjenige der Komponente (C) 1 bis 20 Gew.-% beträgt.

5. Verfahren nach einem der Ansprüche 1 bis 4, wobei die Menge an (A), (B) und (C), als Mischung betrachtet, die verwendet wird, 1 bis 8 Gew.-%, auf die gesamte Formulierung der keramische Masse bezogen, beträgt.

6. Verfahren nach einem der Ansprüche 1 bis 5, wobei eine Wärmebehandlung des Extrudats nach der Extrusion ausgeführt wird.

7. Extrudat, das durch ein Verfahren nach einem der Ansprüche 1 bis 6 erhältlich ist, umfassend die keramische Masse, den Celluloseether, Weichmacher und das Entschäumungsmittel wie in irgendeinem der Ansprüche 1-5 definiert.

8. Keramische Masse umfassend (A) mindestens einen Celluloseether, (B) mindestens einen Weichmacher und (C) mindestens ein Entschäumungsmittel, wie in einem der Ansprüche 1 bis 5 angegeben und wobei die keramische Masse mindestens eine Verbindung umfasst ausgewählt aus der Gruppe bestehend aus Kordierit, Mullit, Siliciumcarbid, Titandioxid, Titancarbid, Borcarbid, Boroxid; Talkum, Ruß, Graphit, Seltenerdeoxiden und Zeolithen.

9. Verwendung eines Zusatzmittels für die Extrusion von keramischen Massen, wobei die keramische Masse mindestens eine Verbindung umfasst ausgewählt aus der Gruppe bestehend aus Kordierit, Mullit, Siliciumcarbid, Titandioxid, Titancarbid, Borcarbid, Boroxid; Talkum, Ruß, Graphit, Seltenerdeoxiden und Zeolithen, das Zusatzmittel (A) mindestens einen Celluloseether, (B) mindestens ein Polycarbonsäurecopolymer und/oder Salz davon als Weichmacher und (C) mindestens ein Entschäumungsmittel wie in Anspruch 1 definiert, umfasst.

## Revendications

1. Procédé d'extrusion de masses de céramique, qui comprend
a) le mélange d'une masse de céramique et qui comprend au moins un composé sélectionné dans le groupe constitué de la cordiérite; de la mullite; du carbure de silicium; du dioxyde de titane; du carbure de titane; du carbure de bore; de l'oxyde de bore; du talc; du noir de carbone; du graphite; des oxydes de terres rares et des zéolites, avec
(A) au moins un éther de cellulose,
(B) au moins un agent plastifiant, les copolymères de poly(acide carboxylique) et/ou leurs sels étant utilisés, et
(C) au moins un agent démoussant sélectionné dans le groupe comprenant les homopolymères, copolymères, terpolymères et copolymères séquencés d'alcylène glycol; les produits d'addition des oxydes d'alcylène; les éthers d'alcylène glycol d'alcools supérieurs; les esters d'acide gras d'alcylène glycol; les esters d'acide gras de polyoxyalcylène sorbitol; les produits d'addition de l'oxyde d'éthylène et de l'oxyde de propylène et de l'acétylène; les esters de phosphate; et leurs mélanges,
comme composants individuels ou comme additif prémélangé, la quantité de (A), (B) et (C), visualisée comme un mélange, utilisée dans la masse de céramique est de 0,3 à 10 % en poids sur la base de la formulation totale de la masse de céramique et
b) et par la suite son extrusion.

2. Procédé selon la revendication 1, les éthers de cellulose ayant une viscosité de 400 à 200 000 mPa·s, déterminée dans une solution aqueuse de 2 % en poids à 20°C, sont utilisés comme éther de cellulose (A).

3. Procédé selon la revendication 1, les homopolymères, copolymères, terpolymères ou copolymères séquencés d'alcylène glycol étant utilisés comme agent démoussant à base de polyéther.

4. Procédé selon l'une quelconque des revendications 1 à 3, dans lequel, sur la base de la quantité totale de (A), (B) et (C), la proportion du composant (A) est de 10 à 91 % en poids, celle du composant (B) est de 8 à 70 % en poids et celle du composant (C) est de 1 à 20 % en poids.

5. Procédé selon l'une quelconque des revendications 1 à 4, dans lequel la quantité de (A), (B) et (C), visualisée comme un mélange, utilisée est de 1 à 8 % en poids sur la base de la formulation totale de la masse de céramique.

6. Procédé selon l'une quelconque des revendications 1 à 5, dans lequel un traitement thermique de l'extrudat est effectué après l'extrusion.

7. Extrudat pouvant être obtenu selon un procédé selon l'une quelconque des revendications 1 à 6 comprenant la masse de céramique, l'éther de cellulose, l'agent plastifiant, et l'agent démoussant tel que défini selon l'une quelconque des revendications 1 à 5.

8. Masse de céramique comprenant (A) au moins un éther de cellulose, (B) au moins un agent plastifiant et (C) au moins un agent démoussant tel que spécifié selon l'une quelconque des revendications 1 à 5 et la masse de céramique comprenant au moins un composé sélectionné dans le groupe constitué de la cordiérite; de la mullite; du carbure de silicium; du dioxyde de titane; du carbure de titane; du carbure de bore; de l'oxyde de bore; du talc; du noir de carbone; du graphite; des oxydes de terres rares et des zéolites.

9. Utilisation d'un additif pour l'extrusion de masses de céramique, la masse de céramique comprenant au moins un composé sélectionné dans le groupe constitué de la cordiérite; de la mullite; du carbure de silicium; du dioxyde de titane; du carbure de titane; du carbure de bore; de l'oxyde de bore; du talc; du noir de carbone; du graphite; des oxydes de terres rares et des zéolites, l'additif comprenant (A) au moins un éther de cellulose, (B) au moins un copolymère de poly(acide carboxylique) et/ou son sel comme agent plastifiant et (C) au moins un agent démoussant tel que défini selon la revendication 1.
